# EUROPEAN PATENT SPECIFICATION

(11) **EP 3 683 940 B1**
(45) Date of publication and mention of the grant of the patent: **31.07.2024**
(21) Application number: 19151943.8
(22) Date of filing: 15.01.2019
(51) Int. Cl.: H02K 15/00, H02K 3/28, H01R 43/05, H02K 3/52, H01R 4/18, H01R 4/20, H01R 43/02

(54) **STATOR WINDINGS FOR AN ELECTRIC MOTOR OR GENERATOR**
STATORWICKLUNGEN FÜR EINEN ELEKTROMOTOR ODER GENERATOR
ENROULEMENTS DE STATOR POUR MOTEUR OU GÉNÉRATEUR ÉLECTRIQUE

(43) Date of publication of application: 22.07.2020
(73) Proprietor: Hamilton Sundstrand Corporation, Charlotte, NC 28217-4578 (US)
(72) Inventor: XU, Zeyuan, Glasgow, Strathclyde G14 9PD (GB); GERADA, David, Beeston, Nottinghamshire NG92BY (GB); GOLOVANOV, Dmitry, Nottingham, Nottinghamshire NG9 3EZ (GB); SAWATA, Tadashi, Coventry, West Midlands CV3 5BN (GB); PAGE, Andrew, Tring, Hertfordshire HP23 4QD (GB); GERADA, Christopher, Nottingham NG7 2RD (GB)
(74) Representative: Dehns

(56) References cited:
- EP-B1- 3 245 717
- DE-A1- 102015 211 356
- DE-A1- 2 539 122
- US-A1- 2004 061 390

## Description

### FIELD

The present disclosure relates generally to a method of manufacturing a stator assembly for an electric motor or generator, and such a stator assembly for an electric motor or generator.

### BACKGROUND

Stator assemblies for electric motors and generators include a plurality of windings formed from wire. High performance motors may consist of tens of stator windings. An AC voltage supply is connected to the windings such that the windings generate a magnetic field. Different phases of the AC voltage supply are connected to different windings around the stator so as to interact with magnets on the rotor and cause the rotor to rotate. Minimization of AC losses in stator windings is one of the key issues to achieve high power densities.

DE 10 2015 211356 discloses a method of connecting a form-wound coil to a connector. US 2004/0061390 discloses a two part connection including securing a lead wire to a connector, and securing the connector to a terminal with a mechanical fastener. DE 25 39 122 discloses a method of making an Aluminium to Aluminium electrical connection.

### SUMMARY

The present disclosure provides a method of manufacturing a stator assembly for an electric motor or generator as claimed in claim 1..

The multistrand cable may be a Litz wire. The use of a multistrand cable with insulated strands, such as a Litz wire, mitigates the skin effect and proximity effect that increases the electrical resistance of a wire at higher electrical frequencies.

The plurality of wires (i.e. strands) that are electrically insulated from one another may optionally be twisted together. A multistrand cable such as a Litz wire may comprise any number of strands. The multistrand cable comprises ≥ 10 conductive strands, and may comprise ≥ 50 conductive strands, or ≥ 100 conductive strands. Embodiments are contemplated wherein up to 400, 800 or even more conductive strands are provided in the cable. In embodiments of the present disclosure, 130 or 260 strands may be used, for example.

Each stator winding may be wound around an electromagnetic core, such as an iron core.

Each conductive stud may extend from its respective winding in a direction parallel to or perpendicular to a longitudinal axis of the winding. The conductive stud may comprise any suitable shape, such as a cylindrical shape, and any suitable conductive material. The conductive stud may be threaded.

The method may further comprise arranging a plurality of busbars in the stator assembly, wherein each busbar is electrically connected to a plurality of the stator windings via their conductive studs for supplying a same phase of an AC voltage supply to these different windings, wherein each busbar is reversibly connected to each conductive stud to which it is electrically connected.

Different busbars may be connected to different phases of the AC voltage supply.

Connecting the multistrand cable to the conductive stud may cause the plurality of wires to be in electrical communication with one another at the portion where the connection has occurred.

This allows for improved connection of the plurality of the wires to the conductive stud.

Connecting the multistrand cable of each stator winding to a conductive stud may comprise permanently connecting the multistrand cable of each stator winding to the conductive stud.

The multistrand cable of each stator winding is connected to the conductive stud by thermal crimping.

The multistrand cable may be inserted into a barrel of the conductive stud, and the thermal crimping may be applied to the barrel of the conductive stud containing the multistrand cable such that the barrel is compressed and deformed to hold the multistrand cable in place. The wires of the multistrand cable may be electrically insulated from one of another by each wire being surrounded by a layer of any suitable insulating material. The heat of the thermal crimping may melt some or all of the insulation between the wires of the multistrand cable (at the end of the cable), allowing for electrical connection between some or all of the ends of the wires of the multistrand cable in the portion of the multistrand cable which has been thermally crimped.

The crimping may provide a permanent connection between the cable and the conductive stud.

The present disclosure also provides a stator assembly for an electric motor or generator as claimed in claim 5.

The strands of the multistrand cable may be electrically insulated from one another aside from at an end of the multistrand cable, i.e. the strands are only in electrical communication with one another at the end.

The busbars may be repeatedly engageable and disengable using any suitable means, such as mechanical means. For example, the conductive studs may be threaded, and may be repeatedly engageable and disengable to the busbars using nuts.

The connection between the winding and the conductive stud may be made prior to insertion of the winding into the stator housing. This allows for more reliable, repeatable joining, as the multiple strands of the Litz wire can cause problems in providing such a connection when using traditional methods, or making a connection in situ. The conductive stud may then be repeatedly engaged and disengaged with busbars in situ. This allows to the busbars to be rearranged if required, and for the windings to easily be disconnected and removed from the stator housing, for example in order to replace broken or malfunctioning windings, or to change the windings. The reconnectable busbars also allow for reconfiguration of the winding arrangement, such as regrouping coils for different torque or speed requirements, or use of paralleled inverters, instead of replacing a complete stator.

Each stator winding may be permanently connected to the respective conductive stud.

Each busbar may be electrically connected to a plurality of conductive studs.

The multistrand cable may be permanently connected to the conductive stud by inserting a portion of the multistrand cable into a barrel of the conductive stud, and crimping the barrel of the conductive stud.

The crimping is thermal crimping.

Crimping the barrel of the conductive stud when the multistrand cable is located in the barrel deforms the barrel and the cable therein to form a connection and hold the cable in place. Thermal crimping additionally applies heat thereto, which causes the insulating material separating each of the strands within the multistrand cable to melt. This provides for a reliable, repeatable connection between the conductive stud and each of (or a majority of) the strands within the multistrand cable

The present disclosure also provides an electrical motor or generator comprising a stator as disclosed above.

The electrical motor or generator may also comprise a rotor driven by applying current to winding modules in stator

The conductive member may comprise any suitable shape, such as a cylindrical shape, and any suitable conductive material. The conductive member may be threaded.

The multistrand cable of each stator winding may be connected to the respective conductive stud prior to or after mounting the respective stator winding in the stator housing.

### BRIEF DESCRIPTION OF DRAWINGS

Various embodiments will now be described, by way of example only, and with reference to the accompanying drawings in which:
Figure 1 shows a stator housing including a plurality of windings;
Figure 2 shows a closer view of some of the winding modules shown in Figure 1;
Figures 3 and 4 show an example of a method of connecting the multistrand cable to the conductive stud using thermal crimping;
Figure 5 shows an exploded via of a stator 30 in accordance with the present disclosure; and
Figure 6 shows the stator of Figure 5 and the connections between the winding modules in the stator in more detail.

### DETAILED DESCRIPTION

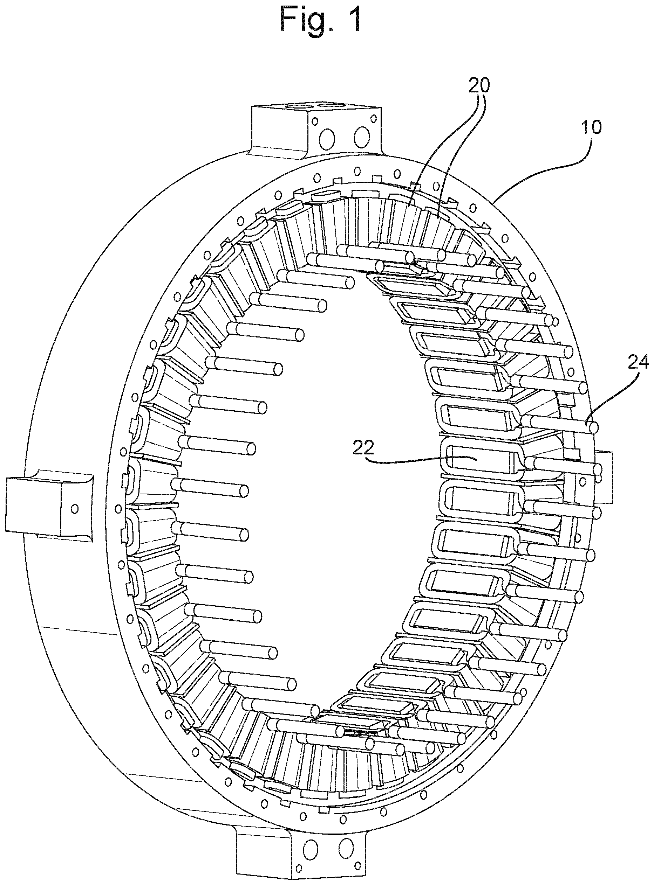

Figure 1 shows a stator housing 10 including a plurality of windings 20. Each winding 20 is depicted as a block in Figure 1, i.e. not showing the wires in the winding 20. Each winding is formed from a multistrand cable, such as a Litz wire, that comprises a plurality of wires (i.e. strands) that are insulated from one another along at least part of their length (e.g. along the whole length except for at the ends). As discussed in more detail below, in the windings of the present disclosure, the strands may be in electrical communication with one another at the end portions of the strands, to electrically connect the ends of each of the strands to a conductive stud 24. The plurality of strands may optionally be twisted together along their length. Each winding may be wound around an electromagnetic core 22 (e.g. an iron core) to from a winding module 20. Each winding module also includes a conductive stud 24 electrically connected to the multistrand cable. The multistrand cable is connected to the conductive stud 24 by thermal crimping. The conductive stud 24 may be externally threaded. Each of the plurality of winding modules 20 can be slid into place in a stator slot in the stator housing 10 (i.e. radially or axially), e.g. after its respective conductive stud 24 has been connected to the multistrand cable. Alternatively, the winding modules 20 may be slid into place in stator slots in the stator housing 10 (i.e. radially or axially) prior to the conductive studs 24 being connected to the multistrand cables.

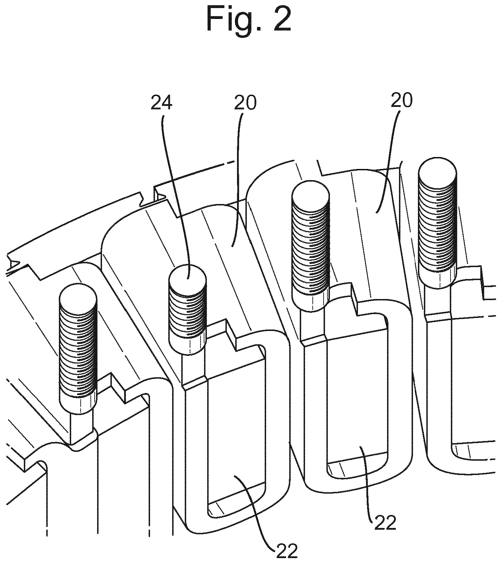

Figure 2 shows a closer view of some of the winding modules 20 shown in Figure 1. In this example, two adjacent winding modules 20 may be interconnected (not shown) so that a current can run through both winding modules 20 in series. For example, a multistrand wire may be wound around the core 22 in one winding module and one of its ends connected to the conductive stud 24 of that module. The same wire may also be wound around an adjacent winding module 20 and the other end of the wire connected to the conductive stud 24 of that winding module 20. The conductive stud 24 of one of said adjacent winding modules 20 may be connected to an electrical input, whilst the conductive stud 24 of the other of said adjacent winding modules 20 may be connected to an electrical output. Alternatively, it is contemplated that each multistrand wire may be wound around more than two adjacent winding module cores 22. The circumferentially outermost of such adjacent winding modules 20 may be connected to an electrical input and electrical output, via their respective conductive studs 24. For example, the multistrand wire may be wound around three cores, with the circumferentially outermost of these winding modules 20 each connected to one of an electrical input or an electrical output via their respective conductive studs 24, with the wire in the central module 20 not being connected to a conductive stud 24.

In another arrangement, each multistrand wire may be wound around only a single winding module core 22. In this arrangement, there is an electrical input and an electrical output on each winding module. For example, each winding module may include two conductive studs, one being an electrical input and one being an electrical output.

The conductive studs 24 may having varying heights to aid in the connections to electrical inputs, outputs or busbars, as will be described below.

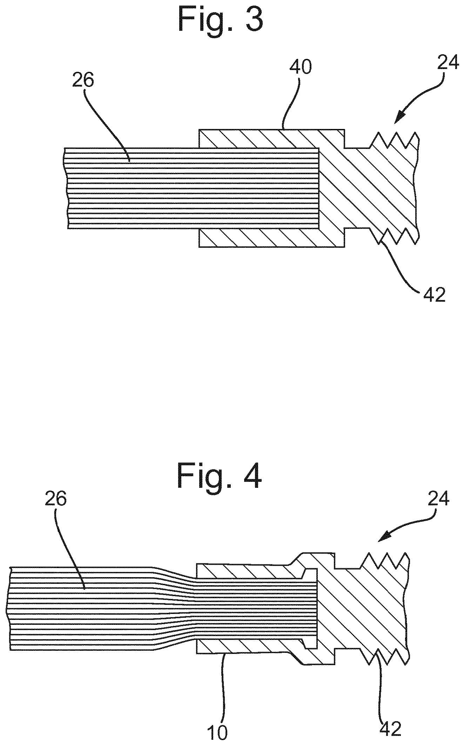

Figures 3 and 4 show an example of a method of connecting the multistrand cable 26 (such as a Litz wire) to the conductive stud 24, using thermal crimping. The conductive stud 24 includes a barrel portion 40 and a threaded portion 42.

As shown in Figure 3, the end of the multistrand cable 26 is inserted into the barrel of the barrel portion 40. During the thermal crimping (not shown), heat and pressure are applied to the barrel portion 40 of the conductive stud 24. The pressure will cause the conductive stud 24 to deform and collapse so as to physically hold the end of the cable 26 in place within the barrel (and in good electrical contact therewith), whilst the heat may cause any electrical insulation around the ends of the strands to melt, providing for a better electrical connection between the ends of the strands and hence to the conductive stud 24. The heat and pressure may be applied by any suitable means.

Alternatively, the end of each strand in the multistrand cable 26 inserted into the barrel may be electrically insulated and the crimping process may break open any electrical insulation at the end portions so that the ends make electrical contact with each other and the barrel.

Figure 4 shows the multistrand cable 26 and the conductive stud 24 after the crimping has occurred. The barrel portion 40 has reduced in diameter due to the pressure applied. This has also compressed the portion of the multistrand cable 26 located therein. As discussed above, any heat applied may also melt the electrical insulation surrounding the strands of the multistrand cable, allowing the strands to be electrically connected together and to the conductive stud 24.

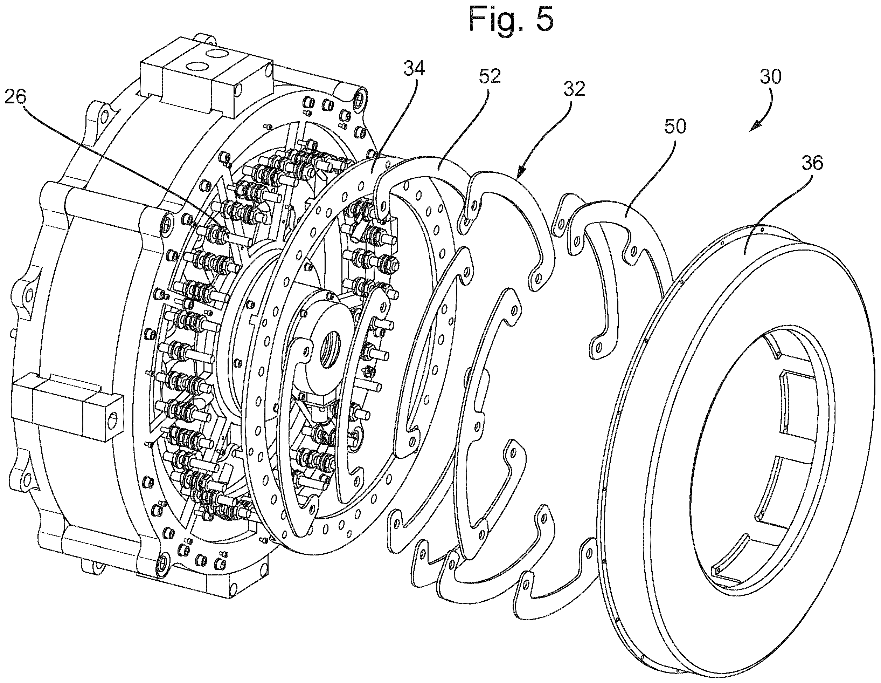

Figure 5 shows an exploded via of a stator 30 in accordance with the present disclosure. The stator 30 includes the stator housing 20 and winding modules 22 of Figure 1. The stator 30 includes a plurality of busbars 32 and an optional cooling bar 34. The busbars 32 and the cooling bar 34 are electrically isolated from each other. This may be done by any suitable means, such as with insulating tape. The stator 30 may also include an end cap 36. The cooling bar 34 may transfer heat away from the winding modules 24 (and optionally the busbars 32) and out of the stator housing 20. It may be replaced or augmented with cooling means such as a cooling portion or bar (not shown) within the end cap 36. The busbars electrically connect the electrical output from one winding module to the electrical input of another winding module (or to electrical neutral), as will be described below.

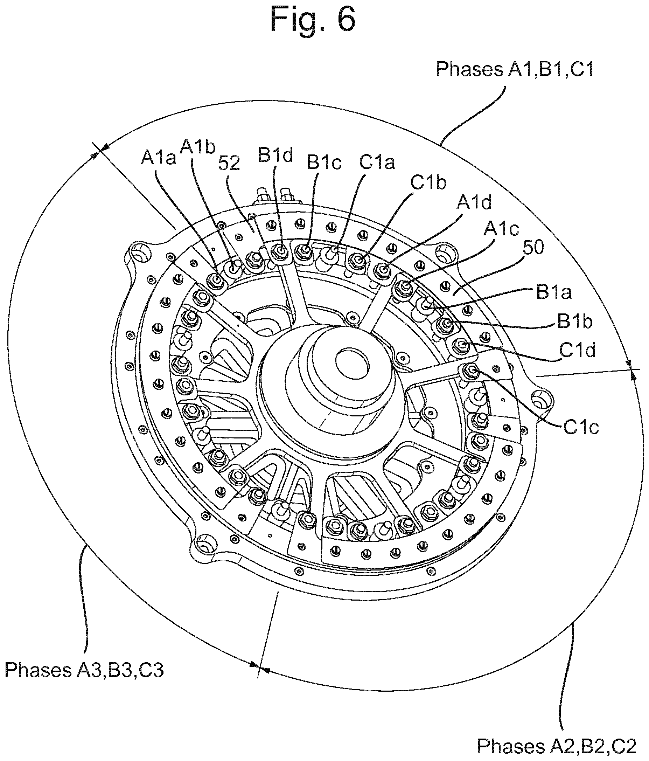

Figure 6 shows the stator of Figure 5 and the connections between the winding modules in the stator in more detail. In this example, the stator has a 3x3 phase configuration.

In phase A1 of the stator, current will be applied to coil A1a. It will then travel through adjacent coil A1b (as shown in Figure 2), followed by busbar 52 (to which coil A1b is connected), then coil A1c and adjacent coil A1d. Coil A1d is then connected to neutral busbar 50. Applied current thus flows from the electrical input to neutral output busbar through a set of windings via connections and busbars.

Similarly, in phases B1 and C1 of the stator, current applied travels from the electrical inputs to a neutral output busbar 50 via windings B1a-d and C1a-d, which are connected in a similar manner as windings A1a-d of phase A1. The phases may all output to the same neutral busbar 50. The windings of phases A1, B1 and C1 are interspersed with one another. Thus, the busbars are required to connect the non-adjacent windings used in the same phase, as discussed above.

Phases A2, B2, and C2 are arranged in the same manner, as are phases A3, B3 and C3. The three sets of phases are disposed around the circumference of the stator.

In Figure 6, there are three phases about the circumference of the stator housing. However, there may be any number of phases, and any number of windings within a single phase.

## Claims

1. A method of manufacturing a stator assembly (30)- for an electric motor or generator comprising:
providing a plurality of stator windings (20), each stator winding (20) formed from a multistrand cable (26) that comprises a plurality of wires that are electrically insulated;
connecting an end of the multistrand cable (26) of each stator winding (20) to a respective conductive stud (24); and then
mounting the stator windings (20) in a stator housing (10);
**characterised in that** the plurality of wires comprises ≥10 wires and **in that** the method comprises removing the electrical insulation between the ends of the plurality of wires at the end of the multistrand cable (26) that is connected to the conductive stud (24);
wherein the multistrand cable (26) of each stator winding (20) is connected to the conductive stud (24) by thermal crimping, and wherein the thermal crimping causes said removal of the electrical insulation.

2. The method of claim 1, comprising arranging a plurality of busbars (32) in the stator assembly (30), wherein each busbar (32) is electrically connected to a plurality of the stator windings (20) via their conductive studs (24) for supplying a same phase of an AC voltage supply to these different windings; wherein each busbar (32) is connectable and disconnectable to each conductive stud (26) to which it is electrically connected.

3. The method of any preceding claim, wherein connecting the multistrand cable (26) of each stator winding (20) to a conductive stud (24) comprises permanently connecting the multistrand cable (26) of each stator winding (20) to the conductive stud (24).

4. The method of any of claims 1-3, wherein the thermal crimping causes said removal of electrical insulation by melting the insulation between the wires of the multistrand cable (26).

5. A stator assembly (30) for an electric motor or generator, the stator assembly (30) comprising:
a stator housing (10);
a plurality of conductive studs (24);
a plurality of stator windings (20) located in the stator housing (10), wherein each stator winding (20) is formed from a multistrand cable (26) that comprises a plurality of wires that are electrically insulated from one another along part of their lengths, and each stator winding (20) has been connected to a respective conductive stud of the plurality of conductive studs (24) by thermal crimping; wherein the plurality of wires comprises ≥10 wires , and the electrical insulation between the plurality of wires of the multistrand cable (26) has been removed at the end of the multistrand cable that is connected to the respective conductive stud (24) by the thermal crimping; and
a plurality of electrically conductive busbars (32) in electrical connection with the conductive studs for supplying different phases of an AC voltage supply to different windings, wherein the busbars (32) are repeatedly engageable and disengagable with the conductive studs (26) so as to be electrically connected and disconnected from the respective windings (20) via the respective conductive studs (24).

6. The stator assembly (30) of claim 5, wherein each stator winding (20) is permanently connected to the respective conductive stud (24).

7. The stator assembly (30) of claim 5 or 6, wherein each busbar (32) is connected to multiple of the plurality of conductive studs (24).

8. The stator assembly (30) of any of claims 5-7, wherein the multistrand cable (26) is permanently connected to the conductive stud (24), and wherein an end portion of the multistrand cable (26) is located in a crimped barrel of the conductive stud (24).

9. An electrical motor or generator comprising the stator assembly (30) of any of claims 5-8.

## Patentansprüche

1. Verfahren zur Herstellung einer Statorbaugruppe (30) für einen Elektromotor oder Generator, umfassend:
Bereitstellen einer Vielzahl von Statorwicklungen (20), wobei jede Statorwicklung (20) aus einem mehrlitzigen Kabel (26) gebildet ist, das eine Vielzahl von Drähten umfasst, die elektrisch isoliert ist;
Verbinden eines Endes des mehrlitzigen Kabels (26) jeder Statorwicklung (20) mit einem entsprechenden leitenden Bolzen (24); und dann
Montieren der Statorwicklungen (20) in einem Statorgehäuse (10);
**dadurch gekennzeichnet, dass** die Vielzahl von Drähten ≥10 Drähte umfasst und dass das Verfahren das Entfernen der elektrischen Isolierung zwischen den Enden der Vielzahl von Drähten an dem Ende des mehrlitzigen Kabels (26) umfasst, das mit dem leitenden Bolzen (24) verbunden ist;
wobei das mehrlitzige Kabel (26) jeder Statorwicklung (20) mit dem leitenden Bolzen (24) durch thermisches Crimpen verbunden ist, und wobei das thermische Crimpen die Entfernung der elektrischen Isolierung bewirkt.

2. Verfahren nach Anspruch 1, umfassend das Anordnen einer Vielzahl von Busbars (32) in der Statorbaugruppe (30), wobei jede Busbar (32) elektrisch mit einer Vielzahl der Statorwicklungen (20) über ihre leitenden Bolzen (24) verbunden ist, um eine gleiche Phase einer Wechselspannungsversorgung an diese verschiedenen Wicklungen zu liefern; wobei jede Busbar (32) mit jedem leitenden Bolzen (26), mit dem sie elektrisch verbunden ist, verbindbar und trennbar ist.

3. Verfahren nach einem der vorhergehenden Ansprüche, wobei das Verbinden des mehrlitzigen Kabels (26) jeder Statorwicklung (20) mit einem leitenden Bolzen (24) das dauerhafte Verbinden des mehrlitzigen Kabels (26) jeder Statorwicklung (20) mit dem leitenden Bolzen (24) umfasst.

4. Verfahren nach einem der Ansprüche 1 - 3, wobei das thermische Crimpen das Entfernen der elektrischen Isolierung durch Schmelzen der Isolierung zwischen den Drähten des mehrlitzigen Kabels (26) bewirkt.

5. Statorbaugruppe (30) für einen Elektromotor oder Generator, wobei die Statorbaugruppe (30) umfasst:
ein Statorgehäuse (10);
eine Vielzahl von leitenden Bolzen (24);
eine Vielzahl von Statorwicklungen (20), die in dem Statorgehäuse (10) angeordnet sind, wobei jede Statorwicklung (20) aus einem mehrlitzigen Kabel (26) gebildet ist, das eine Vielzahl von Drähten umfasst, die entlang eines Teils ihrer Länge elektrisch voneinander isoliert sind, und jede Statorwicklung (20) mit einem jeweiligen leitenden Bolzen der Vielzahl von leitenden Bolzen (24) durch thermisches Crimpen verbunden worden ist; wobei die Vielzahl von Drähten ≥10 Drähte umfasst und die elektrische Isolierung zwischen der Vielzahl von Drähten des mehrlitzigen Kabels (26) an dem Ende des mehrlitzigen Kabels, das mit dem jeweiligen leitenden Bolzen (24) verbunden ist, durch thermisches Crimpen entfernt worden ist; und
eine Vielzahl von elektrisch leitenden Busbars (32), die in elektrischer Verbindung mit den leitenden Bolzen steht, um verschiedene Phasen einer Wechselspannungsversorgung an verschiedene Wicklungen zu liefern, wobei die Busbars (32) wiederholt mit den leitenden Bolzen (26) in Eingriff und außer Eingriff gebracht werden können, um über die jeweiligen leitenden Bolzen (24) mit den jeweiligen Wicklungen (20) elektrisch verbunden und von diesen getrennt zu werden.

6. Statorbaugruppe (30) nach Anspruch 5, wobei jede Statorwicklung (20) dauerhaft mit dem jeweiligen leitenden Bolzen (24) verbunden ist.

7. Statorbaugruppe (30) nach Anspruch 5 oder 6, bei der jede Busbar (32) mit mehreren der Vielzahl von leitenden Bolzen (24) verbunden ist.

8. Statorbaugruppe (30) nach einem der Ansprüche 5-7, wobei das mehrlitzige Kabel (26) dauerhaft mit dem leitenden Bolzen (24) verbunden ist und wobei ein Abschnitt des mehrlitzigen Kabels (26) in einer gecrimpten Hülse des leitenden Bolzens (24) angeordnet ist.

9. Elektrischer Motor oder Generator, umfassend die Statorbaugruppe (30) nach einem der Ansprüche 5-8.

## Revendications

1. Procédé de fabrication d'un ensemble stator (30) pour un moteur ou générateur électrique comprenant :
la fourniture d'une pluralité d'enroulements de stator (20), chaque enroulement de stator (20) étant formé à partir d'un câble multibrins (26) qui comprend une pluralité de fils qui sont électriquement isolés ;
la connexion d'une extrémité du câble multibrins (26) de chaque enroulement de stator (20) à un goujon conducteur respectif (24) ; et ensuite
le montage des enroulements de stator (20) dans un boîtier de stator (10) ;
**caractérisé en ce que** la pluralité de fils comprend ≥ 10 fils et **en ce que** le procédé comprend le retrait de l'isolation électrique entre les extrémités de la pluralité de fils au niveau de l'extrémité du câble multibrins (26) qui est connectée au goujon conducteur (24) ;
dans lequel le câble multibrins (26) de chaque enroulement de stator (20) est connecté au goujon conducteur (24) par sertissage thermique, et dans lequel le sertissage thermique entraîne ledit retrait de l'isolation électrique.

2. Procédé selon la revendication 1, comprenant l'agencement d'une pluralité de barres omnibus (32) dans l'ensemble stator (30), dans lequel chaque barre omnibus (32) est connectée électriquement à une pluralité d'enroulements de stator (20) via leurs goujons conducteurs (24) pour fournir une même phase d'une alimentation en courant alternatif, CA, à ces différents enroulements ; dans lequel chaque barre omnibus (32) peut être connectée et déconnectée à chaque goujon conducteur (26) auquel elle est électriquement connectée.

3. Procédé selon une quelconque revendication précédente, dans lequel la connexion du câble multibrins (26) de chaque enroulement de stator (20) à un goujon conducteur (24) comprend la connexion permanente du câble multibrins (26) de chaque enroulement de stator (20) au goujon conducteur (24).

4. Procédé selon l'une quelconque des revendications 1 à 3, dans lequel le sertissage thermique entraîne ledit retrait de l'isolation électrique en faisant fondre l'isolation entre les fils du câble multibrins (26).

5. Ensemble stator (30) pour un moteur ou générateur électrique, l'ensemble stator (30) comprenant :
un boîtier de stator (10) ;
une pluralité de goujons conducteurs (24) ;
une pluralité d'enroulements de stator (20) situés dans le boîtier de stator (10), dans lequel chaque enroulement de stator (20) est formé à partir d'un câble multibrins (26) qui comprend une pluralité de fils qui sont électriquement isolés les uns des autres le long d'une partie de leur longueurs, et chaque enroulement de stator (20) a été connecté à un goujon conducteur respectif de la pluralité de goujons conducteurs (24) par sertissage thermique ; dans lequel la pluralité de fils comprend ≥ 10 fils, et l'isolation électrique entre la pluralité de fils du câble multibrins (26) a été retirée au niveau de l'extrémité du câble multibrins qui est connectée au goujon conducteur respectif (24) par le thermique sertissage ; et
une pluralité de barres omnibus électriquement conductrices (32) en connexion électrique avec les goujons conducteurs pour fournir différentes phases d'une alimentation en courant alternatif, CA, à différents enroulements, dans lequel les barres omnibus (32) peuvent venir en prise avec et se libérer des goujons conducteurs (26) de manière à être électriquement connectées et déconnectées des enroulements respectifs (20) via les goujons conducteurs respectifs (24).

6. Ensemble stator (30) selon la revendication 5, dans lequel chaque enroulement de stator (20) est connecté en permanence au goujon conducteur respectif (24).

7. Ensemble stator (30) selon la revendication 5 ou 6, dans lequel chaque barre omnibus (32) est connectée à plusieurs de la pluralité de goujons conducteurs (24).

8. Ensemble stator (30) selon l'une quelconque des revendications 5 à 7, dans lequel le câble multibrins (26) est connecté en permanence au goujon conducteur (24), et dans lequel une partie d'extrémité du câble multibrins (26) est située dans un fût serti du goujon conducteur (24).

9. Moteur ou générateur électrique comprenant l'ensemble stator (30) selon l'une quelconque des revendications 5 à 8.
